# EUROPEAN PATENT APPLICATION

(11) **EP 1 949 953 A1**
(43) Date of publication of application: **30.07.2008**
(21) Application number: 06823123.2
(22) Date of filing: 31.10.2006
(51) Int. Cl.: B01D 53/94, B01J 23/44, B01J 23/58, F01N 3/08, F01N 3/10

(54) **EXHAUST GAS CLEAN-UP SYSTEM AND EXHAUST GAS CLEAN-UP METHOD**

(30) Priority: 10.11.2005 JP 2005326388
(71) Applicant: TOYOTA JIDOSHA KABUSHIKI KAISHA, Toyota-shi, Aichi-ken, 471-8571 (JP)
(72) Inventor: OGAI, Masahiko, Toyota-shi, Aichi 4718571 (JP)
(74) Representative: Kuhnen & Wacker
(86) International application number: PCT/JP2006/322219
(87) International publication number: WO 2007/055216

(57) **Abstract**

The apparatus comprises a lean burn engine, a Pd catalyst 1 placed in exhaust gas from the lean burn engine and formed by loading a high concentration of Pd in the range of 3 % by weight or more on a porous oxide, and enriching means 32 for temporally making an exhaust gas atmosphere around the Pd catalyst a rich atmosphere.

It is believed that NO is oxidized into NO₂ on the Pd catalyst 1 in the exhaust gas in a lean atmosphere and that NO₂ originally existing in the exhaust gas and NO₂ generated are adsorbed on Pd. This reaction occurs at low temperatures of about 200 °C to about 300 °C, and thereby NOₓ are stored on the Pd catalyst 1. Therefore, NOₓ can be reduced and purified in a low temperature range from 200 °C to 300 °C without using a NOₓ storage material comprising an alkaline component.

## Description

### TECHNICAL FIELD

The present invention relates to an exhaust gas purifying apparatus used for a lean burn engine operated at an oxygen-excess air to fuel ratio, and an exhaust gas purifying method for purifying NOₓ by using this exhaust gas purifying apparatus.

### BACKGROUND ART

A NOₓ storage and reduction type catalyst (hereinafter referred to as an NSR) is known as an exhaust gas purifying catalyst for a lean burn engine operated at an oxygen-excess air to fuel ratio. This NSR is formed by loading a noble metal such as Pt and a NOₓ storage material selected from alkali metals and alkaline earth metals on a porous oxide such as alumina. NO in exhaust gas in a lean atmosphere is oxidized into NOₓ by the noble metal, and the NOₓ react with the NOₓ storage material and are stored in the catalyst as nitrates. Upon temporally making the exhaust gas a rich atmosphere, the nitrates are decomposed to release NOₓ and the NOₓ storage material recovers its NOₓ storage ability and at the same time the NOₓ react with reducing components such as HC and CO, which are abundant in the atmosphere, and are reduced and purified into N₂.

For example, Japanese Unexamined Patent Publication No.H09-085093 describes an NSR loaded with a NOₓ storage material comprising three components of K, Na and Li. The NOₓ storage material comprising the three components of K, Na and Li reacts with carbon dioxide in the air and exists as a composite carbonate. This composite carbonate has such a remarkably low melting point of 400 °C or less that it becomes unstable in a typical operating temperature range (300 °C to 400 °C) of the catalyst and thus it improves in NOₓ storing and releasing characteristics.

However, since the NSR described in the above publication sharply deteriorates in NOₓ storing and releasing characteristics at exhaust gas temperatures of 300 °C or less, it is difficult for the NSR to purify NOₓ efficiently at a constant atmosphere temperature around 250 °C, such as that of exhaust gas from a diesel engine.

Besides, the NOₓ storage material selected from alkali metals and alkaline earth metals has a problem of lowering oxidation activity of Pt or the like. To deal with this problem, the amount of noble metal loaded is increased but activity appropriate for the amount loaded cannot be obtained due to enhancement of noble metal grain growth or the like.

Moreover, the NOₓ storage material selected from alkali metals and alkaline earth metals has not only an inconvenience of lowing activity as a result of a reaction with a substrate such as cordierite, but also a problem of being susceptible to sulfur poisoning of reacting with SOₓ to lose its NOₓ storage ability. Therefore, as described in the above publication, it has been carried out to generate an easily decomposable composite sulfate by using a NOₓ storage material comprising three components or obstruct SOₓ access by using an acidic porous oxide. However, since an alkaline NOₓ storage material is used, it is unavoidable that NOₓ storage ability is decreased due to reactions with SOₓ.

The present invention has been conceived in view of these circumstances, and it is a main object of the present invention to enable NOₓ to be reduced and purified in a low temperature range from 200 °C to 300 °C without using a NOₓ storage material comprising an alkaline component.

### DISCLOSURE OF INVENTION

An exhaust gas purifying apparatus recited in claim 1, which dissolves the above problems, is characterized in that the apparatus comprises a lean burn engine operated at an oxygen-excess air to fuel ratio, a Pd catalyst placed in exhaust gas from the lean burn engine and formed by loading a high concentration of Pd in the range of 3 % by weight or more on a porous oxide, and enriching means for temporally making an exhaust gas atmosphere around the Pd catalyst a rich atmosphere.

Moreover, an exhaust gas purifying method of the present invention is characterized in purifying NOₓ in exhaust gas by placing the exhaust gas purifying apparatus of the present invention in an exhaust system of the lean burn engine operated at an oxygen-excess air to fuel ratio, temporally making an exhaust gas atmosphere around the Pd catalyst a rich atmosphere by the enriching means, and repeating a lean atmosphere and the rich atmosphere thereafter.

### BRIEF DESCRIPTION OF DRAWINGS

Figure 1 is an explanatory drawing illustrating a reaction mechanism of an exhaust gas purifying apparatus of the present invention.

Figure 2 is a graph showing the relationship between inlet-gas temperature and NOₓ conversion efficiency.

Figure 3 is a graph showing NOₓ concentration in exhaust gas from a Pd catalyst according to the present invention.

Figure 4 is a graph showing the relationship between the weight ratio of Pt/Pd and NOₓ conversion efficiency.

Figure 5 is an explanatory drawing showing an exhaust gas purifying apparatus according to Example 6 of the present invention.

Figure 6 is a graph showing the relationship between inlet-gas temperature and NOₓ conversion efficiency in Example 6 of the present invention.

### BEST MODE FOR CARRYING OUT THE INVENTION

The exhaust gas purifying apparatus recited in claim 1 uses a Pd catalyst formed by loading a high concentration of Pd in the range of 3 % by weight or more on a porous oxide. As the porous oxide it is possible to use at least one of oxides such as Al₂O₃, ZrO₂, TiO₂, CeO₂ and SiO₂, or a composite oxide comprising a plurality of these oxides.

This Pd catalyst can be a pellet catalyst formed of catalyst powder produced by loading Pd on the porous oxide. This Pd catalyst can also be a foam catalyst produced by coating that catalyst powder on a metal foam substrate, or a honeycomb catalyst produced by forming, from that catalyst powder, a catalyst coating layer on cell partition wall surfaces of a honeycomb substrate formed of cordierite or metal.

In the case of the Pd catalyst produced by forming a catalyst coating layer on cell partition wall surfaces of a honeycomb substrate, the amount of the catalyst coating layer formed is preferably 120 g or more per liter of the volume of the catalyst, and it is more preferable to form a coating layer of 150 g or more per liter of the volume of the catalyst. If the amount of the catalyst coating layer formed is small, the density of Pd loaded is increased and accordingly sometimes grain growth is caused and activity is lowered when subjected to high temperatures.

The amount of Pd loaded in the Pd catalyst is 3 % by weight or more, which is larger than those loaded in ordinary exhaust gas purifying catalysts. For example, Japanese Unexamined Patent Publication No.H08-332350 describes a three-way catalyst in which a high concentration of Pd is loaded on the upstream side. This Japanese Patent Publication No.H08-332350 relates to a three-way catalyst and is not used for a lean burn engine operated at an oxygen-excess air to fuel ratio, but the amount of Pd loaded can be as much as those described there. When the amount of Pd loaded is less than 3 % by weight, the catalyst cannot store NOₓ due to a sharp decrease in NO₂ adsorbing ability. On the other hand, when the amount of Pd loaded is too much, the amount of NOₓ adsorbed is saturated and the excess amount of Pd is wasteful. The amount of Pd loaded is desirably in the range of 5 to 10 g and especially desirably in the range of 8 to 10 g per liter of the volume of the Pd catalyst.

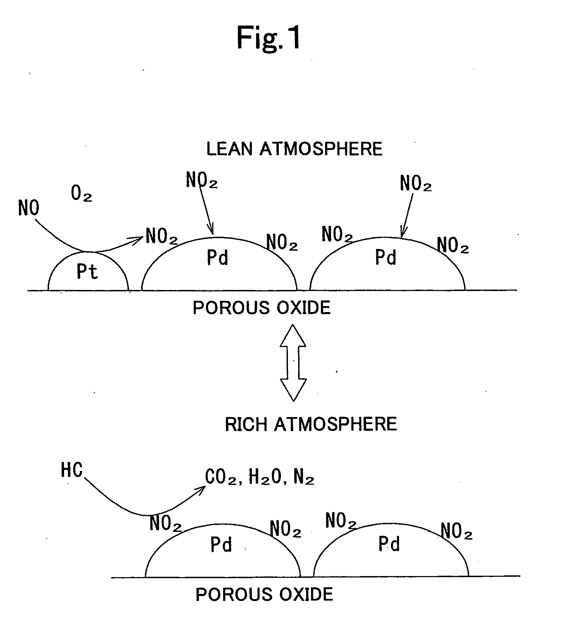

In an exhaust gas purifying method of the present invention, first an exhaust gas atmosphere around the Pd catalyst is temporally made into a rich atmosphere by enriching means. It is believed that owing to this, oxygen adsorbed on Pd is consumed and the surface of Pd is put in a reset state. Then in an oxygen-excess lean atmosphere the reaction shown in Figure 1 is assumed to occur.

Namely, NO in exhaust gas reacts with oxygen in the atmosphere by Pd catalysis and is oxidized into NO₂. In addition, NO₂ also exists originally in the exhaust gas. These kinds of NO₂ are adsorbed on Pd, which means that NOₓ are stored.

Next, when surroundings of the Pd catalyst are temporally made into a rich atmosphere by the enriching means, since Pd has a high oxidation activity even in a rich atmosphere, Pd oxidizes HC and CO and as shown in Figure 1, a reaction between the NO₂ adsorbed and HC or CO occurs on Pd and thus NOₓ are reduced and purified. At the same time with this, Pd restores its NO₂ adsorbing ability.

However, if oxygen is adsorbed on Pd in a lean atmosphere, it becomes difficult for NO₂ to be adsorbed on Pd. Therefore, at the foregoing time of a rich atmosphere, at least an atmosphere around the Pd catalyst is temporally made into a rich atmosphere and this is carried out, taking, into consideration, the amount to be consumed by adsorbed oxygen. The fact that the atmosphere around the Pd catalyst becomes a rich atmosphere means that oxygen is not adsorbed on Pd and in the following lean atmosphere NO₂ is efficiently adsorbed on Pd.

Examples of the enriching means include means for adding a reducing agent in exhaust gas and means for adjusting the air to fuel ratio of an engine. However, it is necessary to temporally make surroundings of the Pd catalyst a rich atmosphere, while taking, into consideration, the amount to be consumed by the Pd catalyst as mentioned above. Therefore, it is desirable to add a high-boiling HC in exhaust gas. Although it is known that addition of a low-boiling HC such as propylene does not improve NOₓ conversion efficiency greatly, the use of a high-boiling HC enables surroundings of the Pd catalyst to be rapidly and temporally made into a rich atmosphere, and NOₓ to be reduced and purified efficiently.

The reason above is not clear but believed to be that time for a reducing agent to exist on a surface of Pd can be increased and that oxygen existing in exhaust gas and oxygen adsorbed on Pd can be consumed for a reaction of cracking into low-boiling HCs and a reaction of oxidizing low-boiling HCs into water and carbon dioxide. It should be noted that the high-boiling HC is preferably saturated aliphatic HC having 6 or more carbon atoms and being in a liquid state at room temperature and, when used for a diesel engine, especially preferably light oil.

Desirably a small amount of Pt is additionally loaded on the Pd catalyst. Since Pt has a higher NO oxidation activity in a lean atmosphere than Pd, a larger amount of NO₂ is generated and the Pd catalyst improves in NOₓ storage ability. As for the amount of Pt loaded in the Pd catalyst, the weight ratio of Pt/Pd is desirably in the range of 0.02 to 0.18. When Pt is loaded above this range, since Pd activity is damaged, NOₓ conversion efficiency is lowered.

In the exhaust gas purifying method of the present invention, a lean atmosphere and a rich atmosphere are repeated. Time allocated for a lean atmosphere is not more than time in which the amount of NO₂ adsorbed on the Pd catalyst is saturated, and time allocated for a rich atmosphere is not more than time in which oxygen adsorbed on the Pd catalyst is consumed and NOₓ released from the Pd catalyst are reduced. Accordingly, the time allocated for the lean and the time allocated for the rich largely depend on the Pd amount of the Pd catalyst.

Besides, the exhaust gas purifying apparatus of the present invention can efficiently purify NOₓ in a low temperature range from about 200 °C to about 300 °C but has a low NOₓ conversion efficiency at temperatures above 300 °C. Therefore, it is desirable to place an NSR loaded with a noble metal and a NOₓ storage material on the exhaust gas downstream side of the Pd catalyst. Since the NSR exhibits a high NOₓ storage ability at about 300 °C or more, a high NOₓ purifying performance is exhibited in a wide temperature range from a low temperature range around about 200 °C to a high temperature range above 450 °C.

When the NSR is placed on the downstream side of the Pd catalyst, an additional effect is exhibited. Namely, since the Pd catalyst starts a reaction from a low temperature, the reaction heat can warm up the NSR. Therefore, when the NSR alone is used, a change into a rich atmosphere is executed from about 250 °C, but in the present invention, a change into a rich atmosphere is desirably executed from the vicinity of about 200 °C. Moreover, in a region of 350 °C to 450 °C in which the NSR easily exhibits its power, the Pd catalyst consumes oxygen for oxidation of HC even in a rich atmosphere. The NSR reduces NOₓ more easily as the oxygen concentration is lower in a rich atmosphere, and therefore upon placing the Pd catalyst on the upstream side, the NOₓ conversion efficiency of the NSR further improves in a high temperature range.

In the exhaust gas purifying apparatus and the exhaust gas purifying method of the present invention, it is believed that in exhaust gas in a lean atmosphere NO is oxidized into NO₂ on the Pd catalyst and NO₂ originally existing in the exhaust gas and NO₂ generated are adsorbed on Pd. This reaction occurs at low temperatures of about 200 °C to about 300 °C and thereby NOₓ are stored on the Pd catalyst.

Then, when an atmosphere around the Pd catalyst is temporally made into a rich atmosphere by the enriching means, the NO₂ adsorbed is released from Pd and NOₓ are reduced and purified by HC and CO, which are abundant in the atmosphere. Furthermore, excessive HC and CO are oxidized by Pd, which exhibits a high oxidation activity even in a reducing atmosphere. Then Pd restores its NO₂ adsorbing ability again and, when the atmosphere is made into a lean atmosphere next, Pd adsorbs NO₂.

Namely, according to the exhaust gas purifying apparatus of the present invention, NOₓ can be reduced and purified in a low temperature range from about 200 °C to about 300 °C. In addition, because an alkaline component is not used, oxidation activity of noble metal is not damaged or activity is not lowered by a reaction with the substrate or sulfur poisoning. Therefore, the apparatus is excellent in durability and can maintain high NOₓ purifying performance in a low temperature range for a long time.

Moreover, if a small amount of Pt is loaded in addition to Pd, since reaction activity to convert NO into NO₂ improves largely and the amount of NOₓ adsorbed on Pd increases, NOₓ conversion efficiency improves.

Furthermore, if an NSR loaded with a noble metal and a NOₓ storage material is placed on the exhaust gas downstream side of the Pd catalyst, since the NSR exhibits a high NOₓ storage ability at about 300°C or more, a high NOₓ purifying performance is exhibited in a wide temperature range from a low temperature range around about 200 °C to a high temperature range above 450 °C.

The exhaust gas purifying apparatus and the exhaust gas purifying method of the present invention can be carried out by using the Pd catalyst alone or by using the Pd catalyst in combination with an oxidation catalyst, a NOₓ storage and reduction catalyst, a filter catalyst or the like.

(EXAMPLES)

Hereinafter, the present invention will be described concretely by way of examples and comparative examples.

(Example 1)

A 35cc honeycomb substrate formed of cordierite (6 mil, 400 cells) was wash-coated with slurry mainly comprising alumina powder, dried and then burned at 500 °C for one hour, thereby forming a coating layer. Next, the coating layer was impregnated with a predetermined amount of an aqueous palladium nitrate solution of a predetermined concentration, dried and then burned at 500 °C for one hour, thereby loading Pd. The obtained Pd catalyst had 120 g of a catalytic coating layer per liter of the honeycomb substrate and the catalytic coating layer was loaded with 10 g of Pd per liter of the honeycomb substrate.

(Example 2)

A coating layer was formed in a similar way to Example 1, and the coating layer was impregnated with a predetermined amount of an aqueous dinitrodiammine platinum solution of a predetermined concentration, dried and then burned at 500 °C for one hour, thereby loading Pt. Next, 10 g of Pd were loaded per liter of the honeycomb substrate in an entirely similar way to Example 1. The catalytic coating layer was loaded with 1 g of Pt per liter of the honeycomb substrate in addition to 10 g/L of Pd.

(Example 3)

A coating layer was formed in a similar way to Example 1, and the coating layer was impregnated with a predetermined amount of an aqueous dinitrodiammine platinum solution of a predetermined concentration, dried and then burned at 500 °C for one hour, thereby loading Pt. Next, 10 g of Pd were loaded per liter of the honeycomb substrate in an entirely similar way to Example 1. The catalytic coating layer was loaded with 2.2 g of Pt per liter of the honeycomb substrate in addition to 10 g/L of Pd.

(Example 4)

A coating layer was formed in a similar way to Example 1, and the coating layer was impregnated with a predetermined amount of an aqueous dinitrodiammine platinum solution of a predetermined concentration, dried and then burned at 500 °C for one hour, thereby loading Pt. Next, 10 g of Pd were loaded per liter of the honeycomb substrate in an entirely similar way to Example 1. The catalytic coating layer was loaded with 3 g of Pt per liter of the honeycomb substrate in addition to 10 g/L of Pd.

(Comparative Example 1)

A coating layer was formed in a similar way to Example 1, and the coating layer was impregnated with a predetermined amount of an aqueous dinitrodiammine platinum solution of a predetermined concentration, dried and then burned at 500 °C for one hour, thereby loading Pt. Next, 0.8 g of Pd was loaded per liter of the honeycomb substrate in a similar way to Example 1. The catalytic coating layer was loaded with 2.2 g of Pt per liter of the honeycomb substrate in addition to 0.8 g/L of Pd.

(Comparative Example 2)

A coating layer was formed in a similar way to Example 1, and the coating layer was impregnated with a predetermined amount of an aqueous dinitrodiammine platinum solution of a predetermined concentration, dried and then burned at 500 °C for one hour, thereby loading Pt. Next, 1.1 g of Pd were loaded per liter of the honeycomb substrate in a similar way to Example 1. The catalytic coating layer was loaded with 3 g of Pt per liter of the honeycomb substrate in addition to 1.1 g/L of Pd.

(Comparative Example 3)

A coating layer was formed in a similar way to Example 1, and the coating layer was impregnated with a predetermined amount of an aqueous dinitrodiammine platinum solution of a predetermined concentration, dried and then burned at 500 °C for one hour, thereby loading Pt. Next, 1.3 g of Pd were loaded per liter of the honeycomb substrate in a similar way to Example 1. The catalytic coating layer was loaded with 5 g of Pt per liter of the honeycomb substrate in addition to 1.3 g/L of Pd.

(Comparative Example 4)

A coating layer was formed in a similar way to Example 1, and the coating layer was impregnated with a predetermined amount of an aqueous dinitrodiammine platinum solution of a predetermined concentration, dried and then burned at 500 °C for one hour, thereby loading Pt. Next, 2 . 5 g of Pd were loaded per liter of the honeycomb substrate in a similar way to Example 1. The catalytic coating layer was loaded with 7 g of Pt per liter of the honeycomb substrate in addition to 2.5 g/L of Pd.

(Comparative Example 5)

A coating layer was formed in a similar way to Example 1, and the coating layer was impregnated with a predetermined amount of an aqueous dinitrodiammine platinum solution of a predetermined concentration, dried and then burned at 500 °C for one hour, thereby loading Pt. Next, 0.8 g of Pd was loaded per liter of the honeycomb substrate in a similar way to Example 1. The catalytic coating layer was loaded with 10 g of Pt per liter of the honeycomb substrate in addition to 0.8 g/L of Pd.

(Comparative Example 6)

A 35cc honeycomb substrate formed of cordierite (3 mil, 400 cells) was wash-coated with slurry mainly comprising alumina powder, dried and then burned at 500 °C for one hour, thereby forming a coating layer. Next, the coating layer was impregnated with a predetermined amount of an aqueous dinitrodiammine platinum solution of a predetermined concentration, dried and then burned at 500 °C for one hour, thereby loading Pt. Additionally, the coating layer was impregnated with a predetermined amount of an aqueous rhodium nitrate solution of a predetermined concentration, dried and then burned at 500 °C for one hour, thereby loading Rh. Consequently, Ba, K and Li were respectively and similarly loaded by using an aqueous potassium nitrate solution of a predetermined concentration, an aqueous barium nitrate solution of a predetermined concentration and an aqueous lithium nitrate solution of a predetermined concentration, respectively. The obtained NSR had 120 g of a catalytic coating layer per liter of the honeycomb substrate and the catalytic coating layer was loaded with 3 g of Pt, 0.5 g of Rh, 0.1 mol of Ba, 0.1 mol of K and 0.1 mol of Li per liter of the honeycomb substrate.

(Experiment and Evaluation)

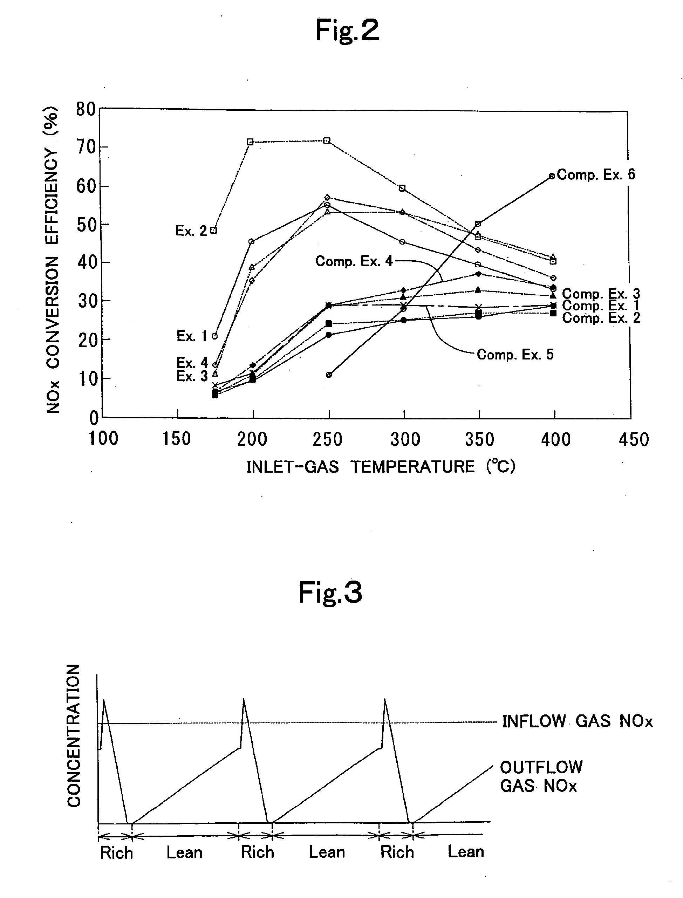

The respective catalysts prepared above were subjected to an endurance test in which the catalysts were respectively heated at 700 °C for 50 hours in the air. The respective catalysts after the endurance test were installed on a constant-pressure fixed-bed flow-type reactor and, while the model gases shown in Table 1 were alternately introduced in a ratio of 20 seconds of the rich gas and 55 seconds of the lean gas, NOₓ conversion efficiency of the catalysts were respectively measured at each temperature. An atmosphere around the Pd catalyst in introducing the rich gas was a reducing atmosphere which was more reducing than required for consuming oxygen adsorbed on the Pd catalyst. Measurement results of NOₓ conversion efficiency are shown in Figure 2. It should be noted that the gas flow rate was 30000 cm³/min and space velocity at that time was about 51,000 h⁻¹.

Moreover, NOₓ conversion behavior of the catalyst of Example 3 was measured under similar conditions while keeping inlet gas temperature at 250 °C and its profile is shown in Figure 3.

**[TABLE 1]**

| | CO (%) | H₂ (%) | C₁₀H₂₂ (ppmC) | NO (ppm) | O₂ (%) | CO₂ (%) | H₂O (%) | N₂ |
|---|---|---|---|---|---|---|---|---|
| LEAN GAS | 0.0 | 0.0 | 33 | 250 | 10 | 10.4 | 10.0 | remainder |
| RICH GAS | 6.0 | 2.0 | 5500 | 250 | 0.2 | 10.4 | 10.0 | remainder |

As apparent from Figure 2, the catalysts of the respective examples exhibited higher NOₓ conversion efficiency in the range from 200 °C to 350 °C than that of the NSR of Comparative Example 6 and were superior in NOₓ purifying performance in a low temperature range to the NSR. Besides, the catalysts of the respective examples had higher NOₓ conversion efficiency especially in a low temperature range than those of the catalysts of Comparative Examples 1 to 5, and this is apparently an effect of loading Pd at a high concentration of 10 g/L.

As shown in Figure 3, the NOₓ conversion behavior of the catalyst of Example 3 showed a similar behavior to that of the NSR, in which NOₓ concentration in exhaust gas instantaneously increased immediately after a change into a rich atmosphere but the NOₓ concentration sharply decreased thereafter and when the atmosphere was made into a lean atmosphere, the NOₓ concentration gradually increased. Therefore, NOₓ emissions can be greatly suppressed by making an atmosphere into a rich atmosphere before NOₓ concentration reaches NOₓ concentration in an inlet gas in a lean atmosphere.

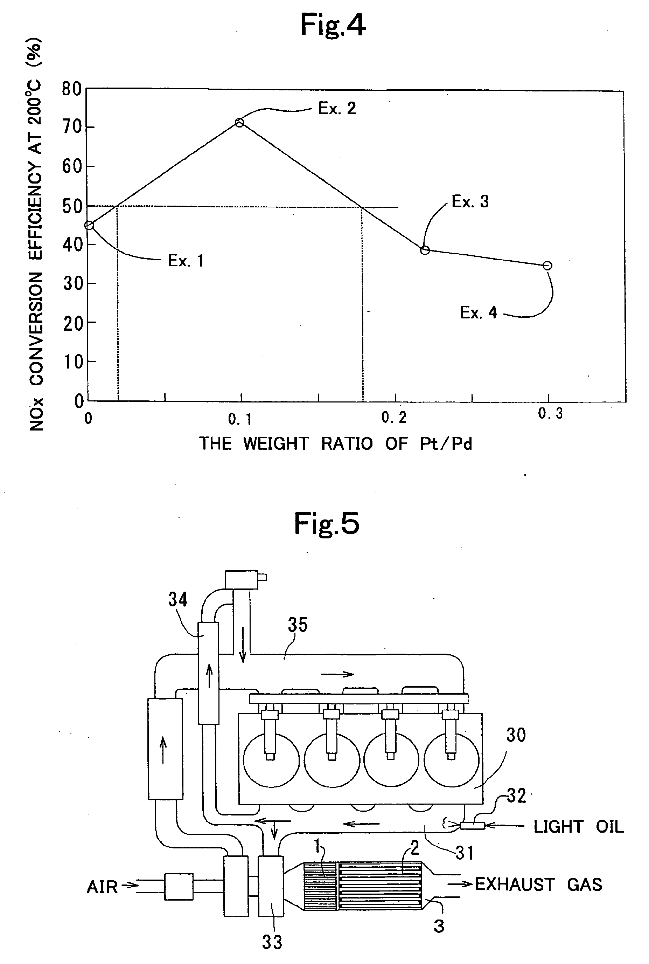

The data of the catalysts of the respective examples were sorted out by NOₓ conversion efficiency at 200 °C and are shown in Figure 4. The catalyst of Example 2 in which the weight ratio of Pt to Pd was Pt:Pd = 1:10 showed a remarkably high NOₓ conversion efficiency and a catalyst with a higher or lower Pt content deteriorated in NOₓ conversion efficiency. It is understood that NOₓ conversion efficiency of 50 % or more is exhibited when the weight ratio of Pt/Pd is in the range from 0.02 to 0.18 and that it is preferable that the amount of Pt loaded is in this range.

(Example 5)

Figure 5 shows an exhaust gas purifying apparatus of this example. This exhaust gas purifying apparatus is formed by placing the Pd catalyst 1 of the abovementioned Example 3 and a filter catalyst 2 adjacently in this order from the exhaust gas upstream side to the downstream side within a catalytic converter 3. The catalytic converter 3 is connected to an exhaust manifold 31 of a diesel engine 30. An injection nozzle 32 is placed in the exhaust manifold 31 and constructed to inject light oil intermittently in exhaust gas. It should be noted that part of exhaust gas from the exhaust gas manifold 31 is returned to an intake manifold 35 of the diesel engine 30 by way of a turbo charger 33 and an intercooler 34.

Hereinafter, a production process of the filter catalyst 2 will be described instead of giving a detailed description of the construction. First a honeycomb structural body formed of cordierite and having a wall flow structure was prepared. This honeycomb structural body had a volume of about 2 liters and cell partition walls of 300 cells/inch² (46.5 cells/cm²) in cell density and 0.3 mm in thickness. The porosity of the cell partition walls was 65 % and the average pore diameter was 25 µm. In this honeycomb structural body, outflow cells having upstream end faces closed and downstream end faces open and inflow cells having upstream end faces open and downstream end faces closed were alternately arranged. The outflow cells and the inflow cells were partitioned by the cell partition walls.

Next a mixed slurry in which respective powders of alumina, titania, zirconia and ceria were dispersed in water was prepared and a coating layer of 150 g/L was formed on cell partition wall surfaces and pore surfaces inside cell partition walls of the abovementioned honeycomb structural body by wash coating. Thereafter, 2 g/L of Pt were loaded by a loading-by-water-absorption method and burned, and 0.3 mol/L of Li, 0.05 mol/L of Ba and 0.025 mol/L of K were respectively loaded by the loading-by-water-absorption method, and then burned at 500 °C, thereby preparing a NOₓ storage and reduction type filter catalyst 2.

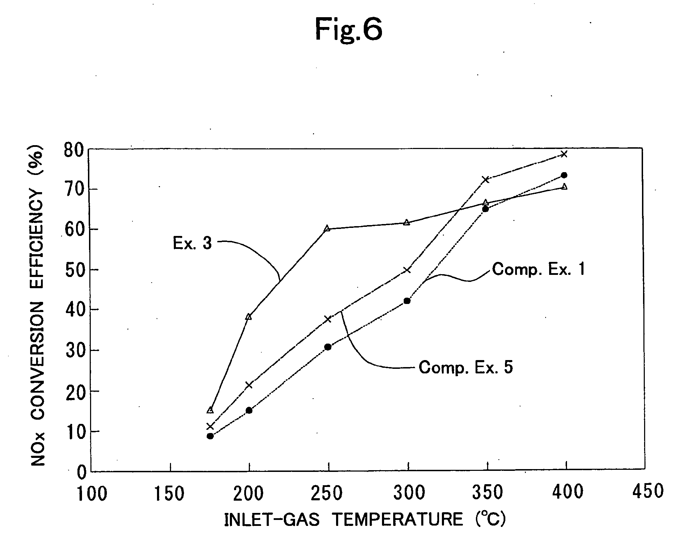

The catalytic converter was installed on an exhaust system of the diesel engine 30 of 2 liter displacement, and subjected to an endurance treatment at 700 °C for 50 hours, and then the diesel engine 30 was driven at 2900 rpm. While light oil was added for 20 seconds after every 55 seconds from the injection nozzle 32, NOₓ conversion efficiency was measured at each inlet gas temperature. The A/F ratio in adding the light oil was controlled to be 15 to 16 based on the whole gas and an atmosphere around the Pd catalyst 1 at that time was a reducing atmosphere which was more reducing than required for consumption of oxygen adsorbed on the Pd catalyst 1. Measurement results of NOₓ conversion efficiency are shown in Figure 6.

(Comparative Example 7)

Exhaust gas purifying apparatus were constructed in a similar way to Example 5, except that the catalysts of Comparative Example 1 and Comparative Example 5 were respectively used in place of the Pd catalyst of Example 3, and NOₓ conversion efficiency of the apparatus was measured in a similar way to Example 5. The results are shown in Figure 6.

(Evaluation)

In Figure 6, the example number and comparative example numbers indicate those corresponding to the upstream catalysts used in Example 5 and Comparative Example 7. As apparent from Figure 6, the apparatus in which the Pd catalyst 1 of Example 3 was placed on the upstream side of the filter catalyst 2 improved in NOₓ conversion efficiency in a low temperature range from 200 °C to 300 °C than those in which the catalyst of Comparative Example 1 or that of Comparative Example 5 was placed on the upstream side of the filter catalyst 2. Namely, upon placing the Pd catalyst 1 on the upstream side of the filter catalyst 2, high NOₓ purifying performance was exhibited in a wide temperature range from a low temperature range around about 200 °C to a high temperature range above 450 °C. This is apparently an effect of placing the Pd catalyst 1 loaded with a high concentration of Pd on the upstream side of the NOₓ storage and reduction type filter catalyst 2.

## Claims

1. An exhaust gas purifying apparatus **characterized in that** the apparatus comprises:
a lean burn engine operated at an oxygen-excess air to fuel ratio;
a Pd catalyst placed in exhaust gas from the lean burn engine and formed by loading a high concentration of Pd in the range of 3 % by weight or more on a porous oxide; and
enriching means for temporally making an exhaust gas atmosphere around the Pd catalyst a rich atmosphere.

2. The exhaust gas purifying apparatus recited in claim 1, wherein the amount of Pd loaded on the Pd catalyst is 5 to 10 g per liter of the volume of the Pd catalyst.

3. The exhaust gas purifying apparatus recited in claim 1 or claim 2, wherein the Pd catalyst further contains Pt and the weight ratio of Pt/Pd is 0.02 to 0.18.

4. The exhaust gas purifying apparatus recited in claim 1, wherein a NOₓ storage and reduction type catalyst loaded with a noble metal and a NOₓ storage material is placed on the exhaust gas downstream side of the Pd catalyst.

5. The exhaust gas purifying apparatus recited in claim 1, wherein the enriching means is means for supplying a high-boiling HC in the exhaust gas.

6. An exhaust gas purifying method for purifying NOₓ in exhaust gas by placing the exhaust gas purifying catalyst recited in any of claims 1 to 4 in an exhaust system of the lean burn engine operated at an oxygen-excessive air to fuel ratio, temporally making an exhaust gas atmosphere around the Pd catalyst a rich atmosphere by the enriching means, and repeating a lean atmosphere and the rich atmosphere thereafter.

7. The exhaust gas purifying method recited in claim 6, wherein the enriching means supplies a high-boiling HC in the exhaust gas.
